Europäisches Patentamt

(19) European Patent Office (11) Publication number: **0 038 078**

Office européen des brevets **B1**

(12) **EUROPEAN PATENT SPECIFICATION**

(45) Date of publication of patent specification: **13.03.85**  (51) Int. Cl.⁴: **H 01 C 7/22, H 01 C 17/12, H 01 C 13/00, G 01 N 27/12, G 01 K 7/18**

(21) Application number: **81102856.2**

(22) Date of filing: **14.04.81**

(54) **Gas sensor.**

(30) Priority: **16.04.80 JP 49204/80**
**16.04.80 JP 49205/80**
**16.04.80 JP 49206/80**
**16.04.80 JP 49207/80**
**16.04.80 JP 49208/80**
**17.12.80 JP 177220/80**

(43) Date of publication of application:
**21.10.81 Bulletin 81/42**

(45) Publication of the grant of the patent:
**13.03.85 Bulletin 85/11**

(84) Designated Contracting States:
**DE FR GB NL**

(56) References cited:
**GB-A-2 029 583**
**US-A-3 676 188**
**US-A-3 699 803**
**US-A-3 845 443**
**US-A-3 932 246**

(73) Proprietor: **KABUSHIKI KAISHA KIRK**
**16-1, Nishi-shinbashi 2-chome Minato-ku**
**Tokyo (JP)**

(72) Inventor: **Ohno, Yoshio**
**4643-2, Midorigaoka**
**Zama-shi Kanagawa (JP)**

(74) Representative: **Blumbach Weser Bergen Kramer Zwirner Hoffmann Patentanwälte Radeckestrasse 43 D-8000 München 60 (DE)**

Courier Press, Leamington Spa, England.

## Description

The present invention relates to a gas sensor using a resistance element the resistance value of which changes in dependence upon the amount or the kind of a sensed gas.

US—A—3,676,188 discloses a sensor for detecting toxic reducing vapors. This known sensor is comprised of an insulating substrate, a thin film of a nobel metal including platinum bonded to substrate and a sensitized portion of a thin metallic salt layer formed on the nobel metal. The sensing mechanism of this known sensor is that the reducing vapor reacts with the reducible metallic salt to produce metal in the salt layer. The quantity of the metal produced is proportional to the reducing vapor adsorbed and lowers the total resistance value measured at the two end terminals of the nobel metal layer. Since the reaction between the reducing vapor and the metallic salt is irreversible the known sensor can be used only one time.

US—A—3,699,803 discloses a gas vapor detecting element comprising an insulating substrate in the form of a cylinder provided with an electric heater extending through the interior thereof, a gas detecting semiconductor and a temperature compensating semiconductor both made of the same metal oxides and fixedly provided by sintering around the outer peripheral surface of said cylinder in adjacent relation to each other. Lead wires are connected to said semiconductors respectively. The temperature compensating semiconductor is hermetically sealed against the atmosphere. The gas sensing mechanism of this known element is based on a change of the ratio of resistance value between the gas detecting semiconductor and the temperature compensating semiconductor. By that it is ensured that temperature dependent resistance variations do not influence the gas sensing operation. By means of the electric heater the gas detecting semiconductor and the temperature compensating semiconductor are kept at a substantially constant elevated temperature.

US—A—3,845,443 discloses a temperature dependent resistance element comprising a narrow thin film platinum resistor of a meandering or serpentine configuration which is sintered into an insulating substrate. The entire top surface of this thin film is coated with a glass top coat and connecting wires are welded to lands formed on the ends of the resistance. This known element is not capable of gas sensing.

It is an object of the invention to provide a gas sensor capable of accurately detecting gas even at a low concentration and featuring an excellent reproducibility of the gas sensitivity.

This object is achieved by a gas sensor as claimed in claim 1.

Another object of the present invention is to provide a platinum thin film resistance element which is capable of accurately detecting carbon monoxide of low concentration.

Another object of the present invention is to provide a platinum thin film resistance which is capable of stably detecting a nitrogen oxide.

Another object of the present invention is to provide a platinum thin film resistance element which is capable of detecting an ammonia gas even at a low concentration.

Yet another object of the present invention is to provide a platinum thin film resistance element which is capable of stably detecting an inflammable gas alone.

A platinum thin film is deposited on the surface of an insulating substrate of, for example, a cylindrical or columnar configuration and a pair of lead wires are electrically connected to both end portions of the platinum thin film and fixed to the insulating substrate. The platinum thin film is deposited by sputtering to a thickness of, for example, about 200 to 1000 Å 0.02 to 0.1 $\mu$m. The insulating substrate is required to have a smooth surface and stand heat aging at 1000°C. The power for the sputtering is selected to be 0.8 W/cm$^2$ or more so as to ensure the adhesion of the platinum thin film to the insulating substrate. The platinum thin film thus deposited on the insulating substrate is stabilized by heat aging, raising temperature from about 100°C up to around 1000°C in a stepwise manner. Thereafter, a spiral kerf is formed in the platinum thin film to obtain thereacross a required resistance value. The abovesaid lead wires are attached to both end portions of the platinum thin film.

In this way, a stable platinum thin film resistance element is obtained which has a resistance value of several tens of ohms to scores of kilo-ohms.

By forming on the platinum thin film a metal oxide semiconductor film capable of adsorbing and releasing a gas to be sensed and selecting the resistance value of the metal oxide semiconductor film to be sufficiently larger than the resistance value of the platinum thin film, it is possible to obtain a platinum thin film resistance element which is capable of gas detection with a linear and hence reproducible detection sensitivity characteristic. Further, by forming a thin film of the copper oxide system on the platinum thin film, a platinum thin film resistance element capable of accurately detecting carbon monoxide even at a low concentration can be obtained. Moreover, a platinum thin film resistance element capable of detecting a nitrogen oxide can be produced by forming on the platinum thin film a film of a mixture including 10 to 30 wt% of rare earth oxide and 0.5 to 5 wt% of silver nitrate with respect to vanadium pentoxide. Also it is possible to obtain a platinum thin film resistance element capable of detecting ammonia by forming on the platinum thin film a film of a mixture including 3 to 10 wt% of rare earth oxide; 1 to 5 wt% of antimony trioxide and 0.5 to 5 wt% of silver nitrate with respect to vanadium pentoxide.

When such a metal oxide film is thus formed on the platinum thin film, a protective layer as of alumina cement or beryllia cement is interposed therebetween, by which it is possible to obtain a gas sensor which detects only a specified gas and has small characteristic variations with time. Further, heating means may be provided in the element for improving its sensitivity. That is, a coiled nichrome wire heater is housed, for example, in a tubular insulating substrate and a current is applied to the heater to heat the platinum thin film resistance element up to a proper temperature.

Figs. 1A to 1E are explanatory of a manufacturing method of a platinum thin film resistance element used in the gas sensor according to the present invention, Figs. 1A, 1B and 1D being sectional views and Figs. 1C and 1E being front views;

Fig. 2 is a sectional view illustrating an example of the gas sensor of the present invention;

Fig. 3 is a perspective view showing the state in which the gas sensor depicted in Fig. 2 is mounted on a stem;

Fig. 4 is a graph showing sensitivity-methane concentration characteristics, using a resistance value $R_1$ of the platinum thin film as a parameter;

Fig. 5 is a graph showing sensitivity-methane concentration characteristics, using a bridge voltage $E_1$ as a parameter;

Fig. 6 is a graph showing gas sensitivity-element temperature characteristic of the resistance element of the present invention employing a copper oxide for a semiconductor film 31;

Fig. 7 is a graph showing the sensitivity-element temperature characteristic of a conventional PdO-system gas sensor;

Fig. 8 is a graph showing the sensitivity-element temperature characteristic of a conventional platinum black system gas sensor;

Fig. 9 is a sectional view illustrating another example of the gas sensor of the present invention for the application; and

Figs. 10 and 11 are diagrams illustrating examples of a temperature compensated bridge circuit for gas detection.

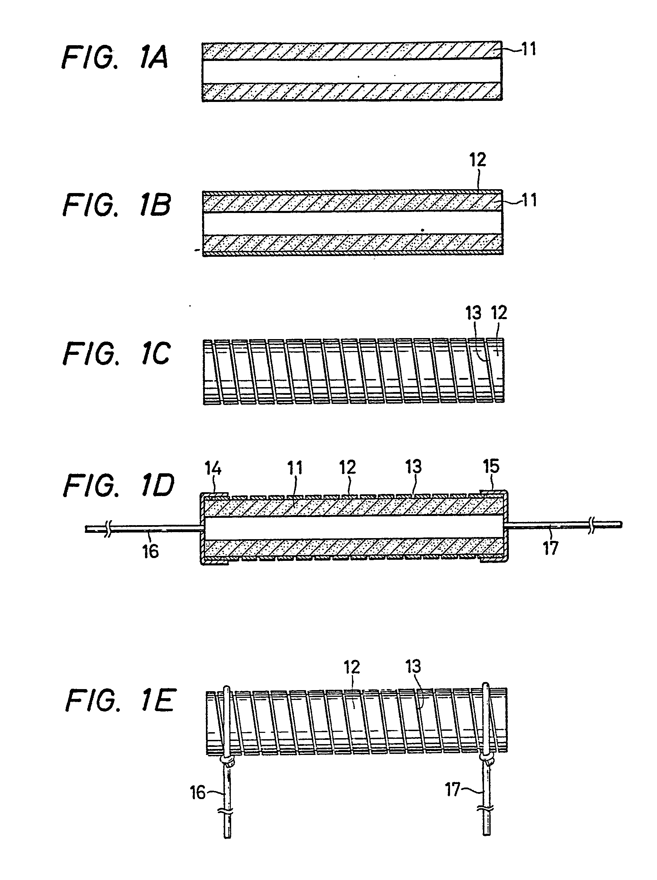

In the present invention, a platinum thin film is deposited on an insulating substrate of a smooth surface, which is formed by transparant fused quartz, hard glass capable of standing temperatures higher than 1000°C or porcelain. The unevenness of the surface of the insulating substrate, if any, is made smaller than the thickness of the platinum film to be formed thereon. As the insulating substrate, use is made of such a cylindrical insulating substrate 11 as shown in Fig. 1A. After being sufficiently washed and dried, the insulating substrate 11 is heated at 1000°C or so in a furnace so that adsorbed gases and water are completely released from the substrate 11. Then, the insulating substrate 11 is put in a sputtering equipment, wherein it is subjected to sputtering of platinum while being rotated about its axis by means of a rotating jig, by which a platinum thin film 12 is deposited uniformly all over the outer peripheral surface of the insulating substrate 11, as shown in Fig. 1B. The platinum thin film 12 has a purity of 99.999% or more. For the above sputtering, a sputtering equipment can be employed and the sputtering condition is such that when a platinum target and the insulating substrate 11 are spaced 1 cm apart, use is made of an ionic current of 10 mA or more with 1.4 KV, that is, the sputtering power of 0.7 W/cm², preferably, 0.8 W/cm² or more. The sputtering time depends on the thickness of the platinum thin film 12 desired to obtain; usually, the sputtering is carried out for approximately an hour to an hour and a half.

The platinum thin film thus formed by sputtering is unstable if it is left untreated. Then, the insulating substrate 11 deposited with the platinum thin film 12 subjected to heat aging in an electric furnace, in which it is heated up to 1000°C raising the temperature, for example, from 100°C by steps of 100°C at one-hour intervals.

After the heat aging, a spiral-shaped kerf 13 is cut by a diamond cutter or laser cutter in the platinum thin film 12 to increase its resistance value. The pitch of the kerf 13 is dependent on the resistance value desired to obtain. By the formation of the kerf 13 the resistance value can be raised in the order of 1000 times. From the viewpoint of increasing the resistance value by the formation of the kerf 13, it is preferred that the thickness of the platinum thin film 12 be at least about 100 Å 0.01 $\mu$m or more. Too large a thickness of the platinum thin film 12 takes much time for sputtering to lower the productivity and increases the amount of platinum used, and hence is not preferred from the economical point of view. Further, for raising the resistance value, too, it is desirable that the thickness of the platinum thin film 12 is not so large; it is considered that a maximum thickness is approximately 1000 Å (0.1 $\mu$m).

Following the formation of the kerf 13, lead wires are connected to both ends of the platinum thin film 12. For example, as depicted in Fig. 1D, caps 14 and 15 of a corrosion resisting metal such as stainless steel are press-fitted and fixed onto the marginal portions of the platinum thin film 12 on both end portions of the cylindrical insulating substrate 11. Then, heatproof lead wires 16 and 17, each produced, for example, by plating an iron wire with copper and then nickel, are connected at one end, as by spot welding, to the centers of the outer end faces of the caps 14 and 15, respectively, through which the lead wires 16 and 17 are electrically connected to the platinum thin film 12.

The lead wires 16 and 17 may be attached, for instance, in the manner shown in Fig. 1E, too, in which the lead wires 16 and 17 of platinum are wound on the platinum thin film 12 on the both end

3

# O 038 078

portions of the insulating substrate 11 and then a platinum paste is baked thereon to connect the lead wires 16 and 17 to the platinum thin film 12 and fix them to the insulating substrate 11.

In the sputtering of platinum, when the sputtering power was smaller than 0.7 W/cm², for example, 0.53 W/cm² with an ionic current of 8 mA and a voltage of 1.4 KV, platinum particles were not firmly deposited by sputtering on the insulating substrate. As compared with the case of an 11 mA ionic current, the quantity of gas adsorbed to the platinum particles was large to make the platinum film sparse and thick, containing many pores around the platinum particles, and the resistance value was as large as 70 to 80 Ω (in the case of the 11 mA ionic current, 20 to 30 Ω). And in the course of heat aging, the platinum particles were dispersed together with the adsorbed gas, resulting in the resistance value becoming 200 Ω to infinity. In the case where the ionic current was 11 mA, however, the adsorbed gas in the platinum thin film was released by the heat aging and the platinum thin film became a thin, continuous or solid film with a resistance value of 1.7 to 2.0 Ω. As will be appreciated from the above, the platinum thin film 12 cannot be formed with the sputtering power of less than 0.70 W/cm².

The platinum thin film deposited by sputtering on the insulating substrate is an assembly of platinum particles and contains gas around them, which gas is released by the heat aging from the platinum thin film to make it a continuous, solid film. Shown in the following are variations in the resistance value and temperature coefficient of the platinum thin film during the heat aging in the case of sputtering platinum on the outer peripheral surface of an insulating substrate 2.5 mm in diameter and 7 mm long using a voltage of 1.4 KV and an ionic current of 11 mA.

| | Resistance value | Temperature coefficient |
|---|---|---|
| Immediately after sputtering | 24 Ω | 2260 PPM |
| 100°C an hour | 24 Ω | 2370 „ |
| 100 to 400°C (raised by steps of 100°C at 1-hour intervals) | 16 Ω | 2700 „ |
| 100 to 600°C ( „ ) | 6 Ω | 2860 „ |
| 100 to 800°C ( „ ) | 2.0 Ω | 3660 „ |
| 100 to 1000°C ( „ ) | 2.0 Ω | 3680 „ |

As is evident from the above, when the heat aging is carried out up to 800°C raising the heating temperature by steps of 100°C at one-hour intervals, the resistance value becomes constant and, in this respect, such heat aging is satisfactory; in terms of the temperature coefficient, however, it is preferred that the heat aging be conducted up to 1000°C.

For testing the stability of the resistance value of the platinum thin film 12, samples were produced by heat-aging platinum thin films of the same lot through various methods, attaching the caps 14 and 15 and the lead wires 16 and 17, forming the spiral kerf 13 to provide a resistance value of about 1000 Ω and then forming the protective film 18. The samples were each subjected to a temperature cycle test for 30 minutes at −50 to 200°C five times and their resistance values at 0°C were measured before and after the tests to check the stability of the resistance value.

| Heat aging method | Result of stability test | Dispersion in temperature coefficient |
|---|---|---|
| ① 100 to 1000°C (raised by steps of 100°C at 40-minute intervals) | −0.3% | ±0.6% |
| ② 100 to 1000°C (raised by steps of 100°C at 1-hour intervals) | −0.01% | ±0.3% |
| ③ 100 to 1000°C (raised by steps of 100°C at 1.5-hour intervals) | −0.01% | ±0.2% |
| ④ 100 to 1000°C (raised by steps of 100°C at 2-hour intervals) | −0.01% | ±0.2% |
| ⑤ 200 to 800°C (raised by steps of 200°C at 2-hour intervals) | −0.7% | ±1.0% |
| ⑥ 200 to 1000°C (raised at steps of 200°C by 2-hour intervals) | −0.4% | ±1.0% |
| ⑦ 400 to 800°C (raised by steps of 100°C at 2-hour intervals) | −0.8% | ±2.3% |
| ⑧ 400 to 1000°C (raised by steps of 100°C at 1-hour intervals) | −0.5% | ±1.8% |

4

The above indicates that the ageing methods ②, ③ and ④ provide a high degree of stability in the resistance value and hence are preferred.

As referred to previously, it is preferred that the platinum thin film be about 100 to 1000 Å (0.01 to 0.1 $\mu$m) thick; therefore, the unevenness of the surface of the insulating substrate 11 is held less than 1.1 $\mu$m. For example, in the case of an alumina substrate, crystals of alumina are several $\mu$ meters in size and even if lapped, the surface of the alumina substrate still has an unevenness of 0.5 $\mu$m or so.

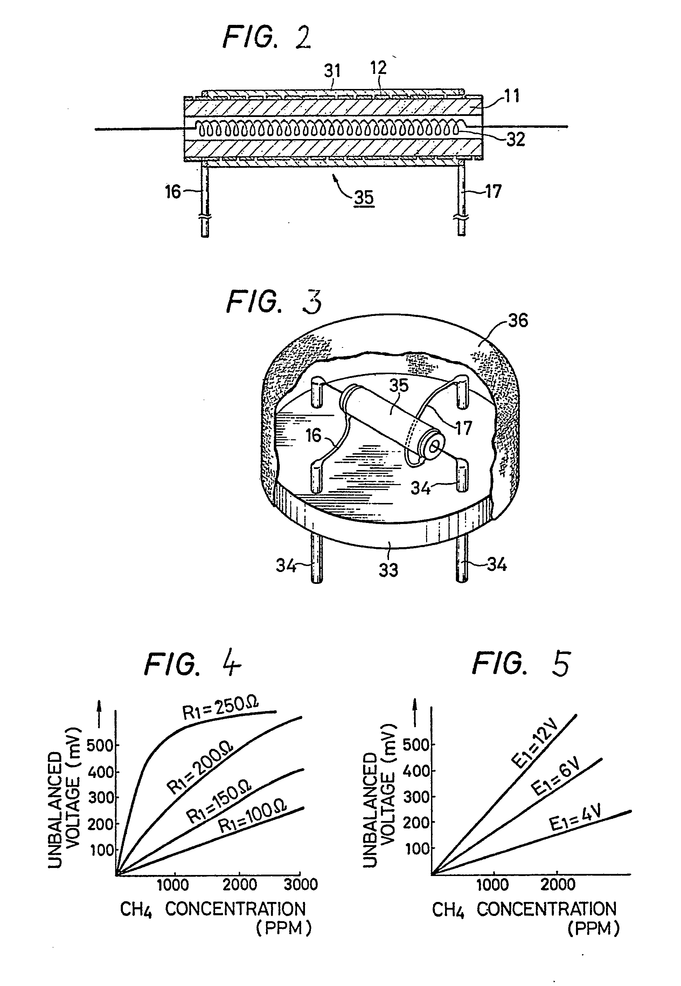

The platinum thin film resistance element employed for a gas sensor which makes use of the change in heat generation coefficient depending upon an amount of gas or the kind of gas absorbed to the surface of a metal oxide. That is, as described previously in respect of Fig. 1, the platinum thin film 12 is deposited on the insulating substrate 11 and the kerf 13 is formed in the platinum thin film 12. Then, as depicted in Fig. 2, a semiconductor oxide film 31 is uniformly deposited by high-frequency sputtering to a thickness of 1 to 2 $\mu$m over the entire area of the platinum thin film 12, rotating the insulating substrate 11; in this case, the semiconductor oxide film 31 may be formed 10 to 20 $\mu$m thick by a painting method. Thereafter, the semiconductor oxide film 31 is heat-aged at 500 to 800°C for several hours, by which the film is stabilized. Finally, a heater 32 formed by a nichrome wire is inserted into the body of the cylindrical insulating substrate 11 to obtain a resistance element 35. As shown in Fig. 3, the lead wires 16 and 17 and both ends of the heater 32 are respectively connected to four terminal pins 34 inserted into and fixed to a stem 33 as of steatite or bakelite and then the resistance element assembly is covered with a net cap 36. The semiconductor oxide film 31 can be made of $SnO_2$, $ZnO$ and $V_2O_5$. The resistance value of the platinum thin film 12 is selected to range from about 100 to 500 $\Omega$.

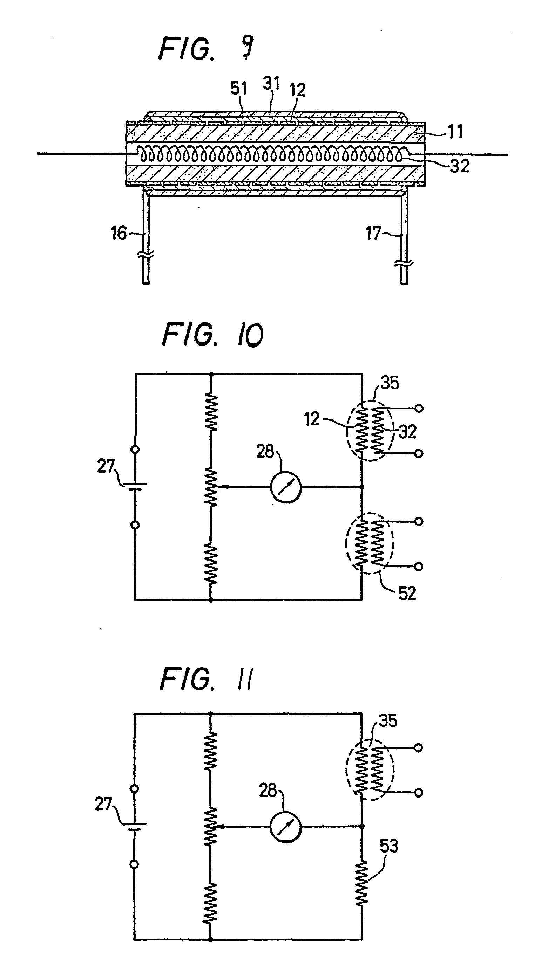

In an experiment in which the insulating substrate 11 was 2.3 mm in diameter and 7 mm long, the resistance value of the platinum thin film 11 was 100 $\Omega$, the semiconductor oxide film 31 was formed of $SnO_2$, the bridge circuit of Fig. 10 was used, the heater 32 with a 90 $\Omega$ resistance value was applied a current of 10 mA with a voltage of 12 V and the voltage of the power source 27 was 4 V, a sensor of the following sensitivity to methane was obtained:

| $CH_4$ | 10 | 50 | 100 | 200 | 500 | 1,000 | 5,000 | 10,000 | PPM |
|---|---|---|---|---|---|---|---|---|---|
| | 3 | 14 | 25 | 41 | 69 | 94 | 178 | 230 | mV |

Drift: lower than 1 mV within 24 hr.

When the methane concentration was changed from 10,000 PPM to zero, the meter 28 returned to the zero point within three minutes.

The gas sensing mechanism in this case is to detect a variation in the resistance value of the platinum thin film 12 which is caused by a temperature rise of the $SnO_2$ film 31 due to the adsorption thereto of methane. Incidentally, the resistance value $R_1$ of the platinum thin film 12 and the resistance value $R_2$ of the $SnO_2$ film 31 undergo such changes as follows:

| Temperature (°C) | $R_1$ ($\Omega$) | $R_2$ (K$\Omega$) |
|---|---|---|
| 20 | 150 | 95 |
| 100 | 199 | 44 |
| 200 | 260 | 4.9 |
| 300 | 310 | 9.5 |
| 400 | 355 | 30 |

In this way, the resistance value of the $SnO_2$ film 31 also varies with the temperature change. A prior art semiconductor gas sensor detects a gas through utilization of a variation in the resistance value of the $SnO_2$ itself which is caused by the gas. The variation characteristic in this case is nonlinear. By the way, in the resistance element for use in the gas sensor, shown in Fig. 2, the resistance value across the lead wires 16 and 17 becomes a parallel resistance value R of the resistance value $R_1$ of the platinum thin film 12 and the resistance value $R_2$ of the $SnO_2$ film 31 as follows:

$$R = \frac{R_1 \times R_2}{R_1 + R_2}$$

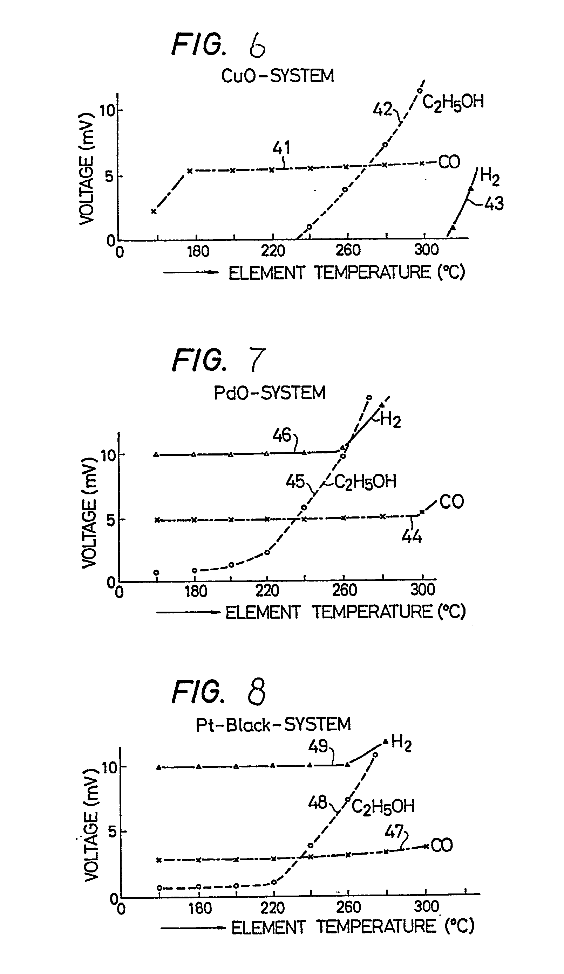

However, by selecting the resistance value $R_2$ to be larger than the resistance value $R_1$, for example, by two orders of magnitude, as shown in the foregoing table, so that the resistance value R across the lead wires 16 and 17 may be substantially dependent on the platinum thin film, the resistance value R can be made linear and stable. For example, in the case of the methane detecting element mentioned previously, the unbalanced voltage characteristic of the bridge circuit with respect to the methane concentration becomes nonlinear when the resistance value $R_1$ of the platinum thin film 12 used as a parameter increases up to about 250 $\Omega$, as shown in Fig. 4. As the resistance value $R_1$ decreases, the unbalanced voltage characteristic becomes linear but the sensitivity drops. Thus, by selecting the resistance value $R_2$ sufficiently larger than the resistance value $R_1$, the sensitivity exhibits linearity and this sensitivity rises with an increase in the voltage $E_1$ of the power source 27 of the bridge circuit, as depicted in Fig. 5.

The gas sensor employing the platinum thin film resistance element shown in Figs. 2 and 3 has the following features:

(1) The zero point is very stable in the absence of a gas.

(2) The sensor becomes stabilized in a short time after connecting thereto the power source. (The initial stabilization characteristic is excellent.)

(3) It is possible to accurately detect methane from a low concentration of 10 PPM or so to a high concentration of 10% or more.

(4) Since a relatively large platinum thin film resistance can be used, a high voltage can also be applied to the sensor when it is incorporated in the bridge circuit and the sensor can be used with its output freely adjusted by selecting the bridge voltage $E_1$.

(5) Since a stable layer of the platinum thin film 12 underlies the semiconductor oxide thin or thick film 31, the sensor suffers no temperature loss and is capable of detecting temperature variations with high sensitivity and hence it is very excellent in response speed and in sensitivity to gas.

(6) Since the resistance of the element is designed to depend on the variation in the resistance of the platinum, the reproducibility of the gas sensitivity is also excellent.

(7) Since the gas sensitivity characteristic is also almost linear, the sensor is easy to use.

For the detection of a gas, in particular, carbon monoxide, the metal oxide semiconductor film 31 is formed of copper monoxide CuO in Fig. 2. From the viewpoints of stability, gas sensitivity and response speed, it is preferred that the CuO film 31 is formed about 1 to 0.5 $\mu$m thick by the high-frequency sputtering or painting. When the resistance elements of various values were heated up to about 200°C by applying a current to the heater 32 and the bridge voltage $E_1$ was set to 6 V and 12 V, the bridge unbalanced voltages with respect to 50 PPM of carbon monoxide were such as follows:

| Resistance value of platinum thin film | Unbalanced voltage ($E_1$=6 V) | Unbalanced voltage ($E_2$=12 V) |
|---|---|---|
| 452 $\Omega$ | 13 mV | 25 mV |
| 523 $\Omega$ | 21 mV | 42 mV |
| 871 $\Omega$ | 30 mV | 60 mV |
| 1700 $\Omega$ | 63 mV | 120 mV |

The sensor provides such large outputs in response to carbon monoxide of low concentration and is sensitive only to carbon monoxide. That is, with this rseistance element, the sensitivities to carbon monoxide, methyl alcohol and hydrogen are respectively such as indicated by curves 41, 42 and 43 in Fig. 6 and, by heating the resistance element below 240°C, it is possible to detect carbon monoxide alone. With a conventional sensor of the type using a palladium oxide for the semiconductor film 31, the sensitivities to carbon monoxide, alcohol and hydrogen are respectively such as indicated by curves 44, 45 and 46 in Fig. 7 and, in this case, even if the element temperature is suitably selected, it is impossible to detect carbon monoxide and hydrogen independently of each other.

Further, in the case of a conventional sensor of the type using platinum black for the semiconductor film 31, the sensitivities to carbon monoxide, alcohol and hydrogen are respectively such as indicated by curves 47, 48 and 49 in Fig. 8 and these gases cannot be detected separately. The sensitivities shown in Figs. 6, 7 and 8 were measured in the case of the concentration of each gas being 500 PPM.

By a suitable selection of the metal oxide for the semiconductor film 31, the element of Fig. 2 can be employed for detecting a nitrogen oxide gas. In this case, 10 to 30 wt. % of a rare earth oxide (for example, samarium trioxide $Sm_2O_3$) and 0.5 to 5 wt. % of silver nitrate $AgNO_3$ are added to vanadium pentoxide $V_2O_5$ and the mixture is sufficiently kneaded with pure water into a paste. The paste after being dried, pulverized and baked in a crucible at 500 to 550°C for more than two hours, thus obtaining a semiconductor powder. The semiconductor powder thus obtained is deposited by the high-frequency sputtering or coated by the painting method on the platinum thin film 12. In an experiment, such semiconductor films were sufficiently heat-aged at 400 to 500°C and further subjected to electrical aging for four to seven days. When the resistance elements were heated up to 300 to 320°C and the bridge voltage $E_1$ was 6 V, the sensitivities to an NO gas were as follows:

| Resistance of platinum thin film ($\Omega$) | Thickness of semiconductor film 31 | Unbalanced voltage (mV) 20 PPM | 40 PPM |
|---|---|---|---|
| 150 | thick | 8 | 15 |
| 200 | „ | 15 | 29 |
| 300 | „ | 18 | 34 |
| 150 | thin | 24 | 45 |
| 220 | „ | 35 | 68 |
| 350 | „ | 42 | 80 |

In the case where the rare earth oxide is 0%, the resistance element is insensitive to NO but sensitive to $NO_2$ alone. As nitrogen oxide gas sensors, there have been known those of the types using $V_2O_5$-Ag and phthalocyanine-copper systems; though capable of detecting the $NO_2$ gas, they are not stable and their sensitivity to NO is not sufficient. In contrast thereto, the platinum thin film resistance element permits the detection of low-concentration NO gas, too.

Further, for the detection of ammonia, the semiconductor film 31 of the element of Fig. 2 was formed using a mixture of 3 to 10 wt. % of $Sm_2O_3$, 1 to 5 wt. % of $Sb_2O_3$ and 0.5 to 5 wt. % of $AgNO_3$ with respect to $V_2O_5$. As shown in the following table, this element is excellent in that it is several times higher in sensitivity to ammonia than conventional ammonia detecting elements and is almost insensitive to perfume and ethyl alcohol.

| | $NH_3$ 40 PPM | Perfume | $C_2H_5OH$ 100 PPM |
|---|---|---|---|
| $SnO_2$ system semiconductor (for ammonia) | 10 mV | 36 mV | 42 mV |
| $SnO_2$-Pd semiconductor (for methane) | 3 | 5 | 12 |
| $V_2O_5$-Ag semiconductor (for $NO_2$) | 18 | 15 | 26 |
| ZnO system semiconductor | 4 | 12 | 18 |
| Element of this invention | 35 | 0 | 2 |

When $Sb_2O_3$ is out of the range from 1 to 5%, the sensitivity to ammonia abruptly lowers.

As described above, the gas sensor having the metal oxide semiconductor film 31 formed on the platinum thin film 12 can be employed for the detection of a specified gas according to the material used for the formation of the semiconductor film 31. Variations in the characteristics of such an element can markedly be reduced, for instance, by forming a protective layer 51 of alumina cement or beryllia cement on the platinum thin film 12 and, further, forming the semiconductor film 31 on the protective film 51, as shown in Fig. 9. For example, in the case of the element having the semiconductor film 31 of the $SnO_2$ system formed directly on the platinum thin film 12 the resistance value increased about 10 to 15% when the element was held at 400°C for seven days, whereas, in the case of the element having the protective layer 51, no resistance variations were observed when the element was held at 400°C for 20 days. This is considered due to the fact that the protective layer 51 prevents diffusion of the platinum from the thin film 12 into the semiconductor film 31 (or vice versa). Moreover, by the provision of such a protective film 51, it is possible to specify the gas to which the element is sensitive. The gas sensitivity of various elements is as follows:

| | $CH_4$ 0.1% | $iC_4H_{10}$ 0.1% | $H_2$ 0.1% | $C_2H_5OH$ 0.1% | CO 0.02% | |
|---|---|---|---|---|---|---|
| Pt-SnO$_2$ | 15~30 | 40~140 | 80~150 | 40~80 | 5~15 | mV |
| Pt-alumina cement-SnO$_2$ | 10~20 | 40~80 | 40~70 | 0~3 | 0~1 | |
| Pt-beryllia cement-SnO$_2$ | 8~10 | 11~16 | 20~25 | 0~1 | 0~1 | |
| Pt-SiO$_2$-SnO$_2$ | 15~30 | 40~140 | 80~150 | 40~80 | 5~15 | |

As will be understood from the above table, by combining the SnO$_2$ film 31 with the beryllia cement layer 51 and the alumina cement layer 51, respectively, there can be obtained gas sensor elements which are almost insensitive to alcohol and smoke but sensitive mainly to inflammable gases that, is natural gas, coke gas, propane gas and so forth.

In the gas sensors of the type utilizing the resistance variation, a temperature compensating element is usually employed for avoiding the influence of ambient temperature. To this end, in the case of sensing a gas by the element 35 having the metal oxide semiconductor film 31, use is made of such a bridge circuit as shown in Fig. 10 which employs, in addition to the element 35, a temperature compensating element 52 which is identical in characteristics with the element 35 except insensitivity to the gas. For increasing the sensitivity, a current is applied to the heater 32 of the element 35 to heat it, for example, up to 150 to 450°C for burning the gas; in this case, a current is also applied to the heater of the temperature compensating element 52 to heat it up to the same temperature as the element 35. In such a case, power consumption is increased by the heaters 32 of the both elements 35 and 52. But in the case where a platinum thin film resistance element 53 with no heater is used as the temperature compensating element and a platinum thin film having a resistance value, for example, 150 Ω at 20°C is used as the element 35 at 350°C to provide a resistance value of 300 Ω as shown in Fig. 11, the resistance value of the platinum thin film resistance element 53 is selected to be equal, at room temperature, to the resistance value of the element 35 at the working temperature, i.e. 300 Ω in this example. According to this arrangement, temperature is sufficiently compensated by the platinum thin film resistance element 53 for compensation use; furthermore, since no heater is needed for the temperature compensation, power consumption is small.

In the foregoing, the insulating substrate 11 need not always be cylindrical but may be plate-shaped, too.

## Claims

1. A gas sensor using a resistance element the resistance value of which changes in dependence upon the amount or the kind of a sensed gas, comprising
an insulating substrate (11),
a platinum thin film (12) having a thickness of 0.01 to 0.1 $\mu$m formed on the substrate,
a pair of lead wires (16, 17) electrically connected to both end portions of the platinum thin film (12) and fixed to the substrate,
a kerf (13) formed in the platinum thin film (12) to increase the resistance value between both end portions of the platinum thin film (12),
a metal oxide semiconductor film (31) formed on the platinum thin film (12) to adsorb and release a gas to be sensed and to raise its temperature due to the gas adsorption, the temperature raise causing a change of the resistance value of the platinum thin film (12).

2. The gas sensor of claim 1 wherein the resistance value of the metal oxide semiconductor film (31) is at least two orders of magnitude larger than the resistance value of the platinum thin film (12).

3. The gas sensor of claim 1 or 2 wherein a protective layer (51) is interposed between the platinum thin film (12) and the metal oxide semiconductor film (31) to prevent the diffusion therethrough of components of both films.

4. The gas sensor of claim 3 wherein the protective layer (51) is formed of alumina cement.

5. The gas sensor of claim 3 wherein the protective layer (51) is formed of beryllia cement.

6. The gas sensor of any of claims 1 to 5 wherein means (32) is provided for electrically heating the insulating substrate (11).

7. The gas sensor of any of claims 1 to 6 wherein the metal oxide semiconductor film (31) is to adsorb and release an inflammable gas.

8. The gas sensor of any of claims 1 to 6 wherein the metal oxide semiconductor film (31) is formed of copper oxide.

9. The gas sensor of any of claims 1 to 6 wherein the metal oxide semiconductor film (31) is

**0 038 078**

formed of a mixture including 10 to 30 wt. % of an oxide of a rare earth and 0.5 to 5 wt. % of silver nitrate AgNO$_3$ with respect to vanadium pentoxide V$_2$O$_5$.

10. The gas sensor of any of claims 1 to 6 wherein the metal oxide semiconductor film (31) is formed of a mixture including 3 to 10 wt. % of samarium trioxide Sm$_2$O$_3$ 1 to 5 wt. % of antimony trioxide Sb$_2$O$_3$ and 0.5 to 5 wt. % of silver nitrate with respect to vanadium pentoxide V$_2$O$_5$.

**Patentansprüche**

1. Gasfühler mit einem Widerstandselement, dessen Widerstandswert sich abhängig von der Menge oder der Art eines gefühlten Gases ändert, umfassend

ein isolierendes Substrat (11),

einen auf dem Substrat ausgebildeten Platindünnfilm (12) mit einer Dicke von 0,01 bis 0,1 $\mu$m,

ein Paar von Leitungsdrähten (16, 17), die elektrisch mit den beiden Endteilen des Platindünnfilms (12) verbunden und am Substrat fixiert sind,

eine in dem Platindünnfilm (12) ausgebildete Kerbe (13) zur Erhöhung des Widerstandswerts zwischen den beiden Endteilen des Platindünnfilms (12), und

einen Metalloxidhalbleiterfilm (31, der auf dem Platindünnfilm (12) ausgebildet ist, um zu fühlendes Gas zu adsorbieren und freizugeben und infolge der Gasadsorption seine Temperatur zu erhöhen, wobei der Temperaturanstieg eine Änderung des Widerstandswerts des Platindünnfilms (12) bewirkt.

2. Gasfühler nach Anspruch 1, bei dem der Widerstandswert des Metalloxidhalbleiterfilms (31) um wenigstens zwei Größenordnungen größer als der Widerstandswert des Platindünnfilms (12) ist.

3. Gasfühler nach Anspruch 1 oder 2, bei dem eine Schutzschicht (51) zwischen den Platindünnfilm (12) und den Metalloxidhalbleiterfilm (31) zur Verhinderung einer Diffusion von Komponenten beider Filme durch diese Schicht gefügt ist.

4. Gasfühler nach Anspruch 3, bei dem dei Schutzschicht (51) aus Tonerdezement gebildet ist.

5. Gasfühler nach Anspruch 3, bei dem die Schutzschicht (51) aus Glucinerdezement gebildet ist.

6. Gasfühler nach einem der Ansprüche 1 bis 5, bei dem eine Einrichtung (32) zum elektrischen Erhitzen des isolierenden Substrats (11) vorgesehen ist.

7. Gasfühler nach einem der Ansprüche 1 bis 6, bei dem der Metalloxidhalbleiterfilm (31) dazu dient, entflammbares Gas zu adsorbieren und freizugeben.

8. Gasfühler nach einem der Ansprüche 1 bis 6, bei dem der Metalloxidhalbleiterfilm (31) aus Kupferoxid gebildet ist.

9. Gasfühler nach einem der Ansprüche 1 bis 6, bei dem der Metalloxidhalbleiterfilm (31) aus einer Mischung enthaltend 10 bis 30 Gewichtsprozent eines Seltenerden und 0,5 bis 5 Gewichtsprozent Silbernitrat AgNO$_3$ bezogen auf Vanadiumpentoxid V$_2$O$_5$ gebildet ist.

10. Gasfühler nach einem der Ansprüche 1 bis 6, bei dem der Metalloxidhalbleiterfilm (31) gebildet ist aus einer Mischung enthaltend 3 bis 10 Gewichtsprozent Samarium trioxid Sm$_2$O$_3$, 1 bis 5 Gewichtsprozen Antimontrioxid Sb$_2$O$_3$ und 0,5 bis 5 Gewichtsprozent Silbernitrat bezogen auf Vanadiumpentoxid V$_2$O$_5$.

**Revendications**

1. Détecteur de gaz utilisant un élément résistant dont la résistance se modifie en fonction de la quantité ou de la sorte d'un gaz décelé, caractérisé en ce qu'il comprend:

un substrat isolant (11),

une pellicule mince de platine (12) ayant une épaisseur de 0,01 à 0.1 $\mu$m formée sur le substrat,

deux fils de connexion (16, 17) électriquement reliés aux deux parties terminales de la pellicule mince de platine (12) et fixés au substrat,

une entaille (13) ménagée dans la pellicule mince de platine (12) pour augmenter la résistance existant entre les deux parties terminales de la pellicule mince de platine (12) et

une pellicule semiconductrice d'oxyde métallique (31) formée sur la pellicule mince de platine (12) pour adsorber et libérer un gaz à déceler et élever sa température du fait de l'adsorption de gaz, l'élévation de température provoquant une modification de la résistance de la pellicule mince de platine (12).

2. Détecteur de gaz selon la revendication 1, caractérisé en ce que la résistance de la pellicule semiconductrice d'oxyde métallique (31) est supérieure d'au moins deux ordres de grandeur à la résistance de la pellicule mince de platine (12).

3. Détecteur de gaz selon la revendication 1 ou 2, caractérisé en ce qu'on interpose une couche protectrice (51) entre la pellicule mince de platine (12) et la pellicule semiconductrice d'oxyde métallique (31) pour empêcher la diffusion à travers elle de constituants des deux pellicules.

4. Détecteur de gaz selon la revendication 3, caractérisé en ce que la couche protectrice (51) est formée de ciment d'alumine.

5. Détecteur de gaz selon la revendication 3 caractérisé en ce que la couche protectrice (51) est formée de ciment de glucine.

6. Détecteur de gaz selon l'une quelconque des revendications 1 à 5 caractérisé en ce qu'un moyen (32) est disposé pour chauffer électriquement le substrat isolant (11).

7. Détecteur de gaz selon l'une quelconque des revendications 1 à 6 caractérisé en ce que la pellicule semi-conductrice d'oxyde métallique (31) est adaptée à adsorber et libérer un gaz inflammable.

8. Détecteur de gaz selon l'une quelconque des revendications 1 à 6 caractérisé en ce que la pellicule semiconductrice d'oxyde métallique (31) est formée d'oxyde de cuivre.

9. Détecteur de gaz selon l'une quelconque des revendications 1 à 6 caractérisé en ce que la pellicule semiconductrice d'oxyde métallique (31) est formée d'un mélange comportant 10 à 30% d'une terre rare et 0,5 à 5% de nitrate d'argent $AgNO_3$ en podis rapportés à du pentoxyde de vanadium $V_2O_5$.

10. Détecteur de gaz selon l'une quelconque des revendications 1 à 6 caractérisé en ce que la pellicule semi-conductrice d'oxyde métallique (31) est formée d'un mélange comportant 3 à 10% de trioxyde de samarium $Sm_2O_3$, 1 à 5% d'oxyde d'antimoine et 0,5 à 5% de nitrate d'argent en poids rapportés à du pentoxyde de vanadium $V_2O_5$.

*FIG. 1A*

*FIG. 1B*

*FIG. 1C*

*FIG. 1D*

*FIG. 1E*

# FIG. 2

# FIG. 3

# FIG. 4

UNBALANCED VOLTAGE (mV)

$R_1=250\Omega$
$R_1=200\Omega$
$R_1=150\Omega$
$R_1=100\Omega$

$CH_4$ CONCENTRATION (PPM)

# FIG. 5

UNBALANCED VOLTAGE (mV)

$E_1=12V$
$E_1=6V$
$E_1=4V$

$CH_4$ CONCENTRATION (PPM)

2

*FIG. 6*

CuO-SYSTEM

*FIG. 7*

PdO-SYSTEM

*FIG. 8*

Pt-Black-SYSTEM

## FIG. 9

## FIG. 10

## FIG. 11